# EUROPÄISCHE PATENTSCHRIFT

(11) **EP 1 390 737 B1**
(45) Veröffentlichungstag und Bekanntmachung des Hinweises auf die Patenterteilung: **22.11.2006**
(21) Anmeldenummer: 02732413.6
(22) Anmeldetag: 04.05.2002
(51) Int. Cl.: G01N 29/00

(54) **ZERSTÖRUNGSFREIE ULTRASCHALL-PRÜFMETHODE ZUR SCHADENSDETEKTION**
NON-DESTRUCTIVE ULTRASOUND TEST METHOD FOR DETECTION OF DAMAGE
PROCEDES DE VERIFICATION AUX ULTRASONS NON DESTRUCTIVE PERMETTANT LA DETECTION D'ENDOMMAGEMENTS

(30) Priorität: 12.05.2001 DE 10123237
(43) Veröffentlichungstag der Anmeldung: 25.02.2004
(73) Patentinhaber: EADS Deutschland GmbH, 85521 Ottobrunn (DE)
(72) Erfinder: DITTRICH, Kay, 85635 Höhenkirchen (DE); KRESS, Klaus-Peter, 97421 Schweinfurt (DE)
(86) Internationale Anmeldenummer: PCT/DE2002/001617
(87) Internationale Veröffentlichungsnummer: WO 2002/093156

(56) Entgegenhaltungen:
- US-A- 4 041 774
- US-A- 4 803 638
- US-A- 5 398 538
- US-A- 5 631 424
- KRESS K-P; DITTRICH K; GUSE G: "Smart Wide-Area Imaging Sensor System (SWISS)" PROC. SPIE, Bd. 4332, 8. März 2001 (2001-03-08), Seiten 490-496, XP008014768 USA

## Beschreibung

Die Erfindung betrifft eine zerstörungsfreie Ultraschall-Prüfmethode zur Schadensdetektion und insbesondere zur Schadensbewertung und -lokalisierung in Bezug auf einen Prüfbereich eines Strukturteils gemäß dem Oberbegriff von Patentanspruch 1.

Zur Detektion eines beginnenden Schadens oder zur Verfolgung einer Schadensentwicklung von Strukturen oder Strukturteilen beispielsweise von Fahrzeugen und insbesondere von Flugzeugen, d.h. zur Prüfung der Struktur-Integrität, werden nach heutigem Stand der Technik zerstörungsfreie Prüfmethoden angewandt. Um die Integrität von Strukturen oder Strukturteilen zu überprüfen, kann es bei der Verwendung auch von zerstörungsfreien Prüfverfahren nach dem Stand der Technik erforderlich sein, die zu prüfende Struktur bzw. die Strukturteile wegen deren ungünstiger Zugänglichkeit für die jeweils zu verwendende Prüfvorrichtung zu zerlegen, um sie der Prüfung zugänglich zu machen. Dies kann jedoch mit hohem Zeit- und Ressourcenaufwand verbunden sein.

Aus dem Vortrag "Qualification and Validation of New Saphir-UT-Technology" auf der 1. European Conference on Nondestructive Testing" vom 26. bis 29. Mai 1998 in Kopenhagen ist ein zerstörungsfreies Ultraschall-Prüfverfahren bekannt, bei dem sehr leistungsfähige Wirbelstrom oder Ultraschallsensoren verwendet werden, die temporär an der Bauteiloberfläche angekoppelt werden. Mit zu den leistungsfähigsten Ultraschall-Sensortypen gehören u.a. die sog. Ultraschall-Gruppenstrahler, die mehrere gemeinsam betriebene Ultraschallquellen, vorzugsweise in Form von piezoelektrischen Elementen, aufweisen. Von den Ultraschallquellen, die über eine elektrische Anregung angesteuert werden, geht eine Ultraschall-Anregung der Struktur aus, die sich durch die zu prüfende Strukturkomponente als Struktur-Antwort oder Schallfeld fortpflanzt und an gegebenenfalls in der Struktur vorhandenen Inhomogenitäten teilweise reflektiert wird. Das an solchen Inhomogenitäten reflektierte Schallfeld kann von den Ultraschall-Gruppenstrahlern zugeordneten Sensoren empfangen und in ein elektrisches Signal umgewandelt werden, um diese Inhomogenitäten in der Struktur sensorisch zu erfassen. Die Anregung erfolgt dabei derart, daß das vom Gruppenstrahler ausgehende Schallfeld die Form einer Keule hat und somit eine bevorzugte Richtung aufweist.

Die Keule kann in einer variierbaren Distanz fokussiert werden. Auf diese Weise können Inhomogenitäten in ein ortsauflösendes Bild abgebildet werden.

Dieses bekannte bildgebende Ultraschall-Verfahren hat den Nachteil, daß es gerätetechnisch sehr aufwendig ist. Die Anzahl der erforderlichen Ultraschallquellen hängt ab von der geforderten Auflösung und Reichweite und kann 8,16,32 oder mehr Kanäle umfassen, die simultan betrieben werden müssen. Dazu ist für jeden Kanal aufwendige Hochfrequenz-Elektronik erforderlich, wie z.B. Elektronik zum Wechsel zwischen Sende- und Empfangsbetrieb, Verstärkerelektronik auf der Ansteuerung und Empfangsseite, Filterelektronik, Hochfrequenz-Analog/Digital-Wandler hoher Bit-Auflösung sowie eine aufwendige Steuerelektronik, um durch phasenverschobene und amplitudenmodulierte Ansteuerung ein Schwenken und Fokussieren des Schallfeldes zu erreichen.

Ein weiterer Nachteil des Verfahrens nach dem Stand der Technik ist, daß die Qualität des Bildes neben physikalischen Parametern (Wellenlänge, Ultraschallwellen-Geschwindigkeit im Material, Dämpfung im Material, etc.) auch von der Positioniergenauigkeit der Sensoren abhängt. Diese ist insbesondere an für die Strahler und Sensoren schwer zugänglichen Stellen der Struktur nicht immer gewährleistet, so daß die Form der Struktur die Genauigkeit des Verfahrens beeinträchtigt.

Daraus ergibt sich der weitere Nachteil, daß ein exakter Vergleich zwischen zwei Prüfergebnissen (Ultraschallbildern) nicht möglich ist, da die Positionierung zwischen zwei Prüfungen im allgemeinen variiert.

Außerdem ist es gerade an diesen schwer zugänglichen Stellen erforderlich, die Oberfläche des Strukturteils freizulegen, was einen sehr großen Aufwand bedeutet.

Schließlich ist in dem Dokument "Smart Wide-Area Imaging Sensor System (SWISS)" von KRESS, K.-P., DITTRICH, K. und GUSE, G., erschienen in PROC. SPIE, Vol. 4332 am 8.März 2001, Seiten 490-496, eine zerstörungsfreie Ultraschall-Prüfmethode zur Detektion von Schäden in einem Prüfbereich von Strukturteilen durch Ermittlung von Reflektionen an Inhomogenitäten im Prüfbereich beschrieben und dargestellt, wobei mehrere Piezo-Ultraschallsensoren (hier Elemente eines Gruppenstrahlers) verwendet werden. Diese Sensoren sind permanent an einem Strukturteil installiert, wodurch relativ zu den Messpunkten der Sensoren Prüfpunkte im Prüfbereich festgelegt werden können. Aus den Messergebnissen werden Ultraschallbilder erstellt. Die mit den Sensoren gemessenen Signale werden gespeichert und mit zu erwartenden Werten verglichen, um herauszufinden, ob ein Schaden vorliegt. - Das besondere an dieser bekannten Prüfeinrichtung besteht in ihrem Simultanbetrieb, das heißt, dass alle Sensoren gleichzeitig in vorbestimmter Weise betrieben werden, um vorbestimmte Prüfpunkte mittels hin- und rücklaufender Ultraschallwellen abzutasten, weswegen alle Prüfelemente als Sender und Empfänger mit entsprechend hohem technischen Geräte- Aufwand je Kanal ausgebildet sein müssen.

Der Erfindung liegt daher die Aufgabe zugrunde, eine zerstörungsfreie Ultraschall-Prüfmethode zur Schadensdetektion, -bewertung und -lokalisierung bereitzustellen, womit der Prüfaufwand verringert und gleichzeitig eine hohe Zuverlässigkeit im Prüfergebnis erreicht wird.

Diese Aufgabe wird mit den kennzeichnenden Merkmalen des unabhängigen Patentanspruchs 1 gelöst. Weitere Ausführungsformen sind in den Unteransprüchen angegeben.

Das erfindungsgemäße Verfahren eignet sich zur Prüfung von Strukturen insbesondere aus Metallen oder Faserverbundwerkstoffen sowie Mischformen aus diesen Materialien und richtet sich je nach dem zu prüfenden Material auf die Erkennung von Schadensstellen, d.h. fehlerhafte Stellen in der Struktur, die aufgrund von Korrosion, Deformationen, Faserbrüchen, Rissen oder Delaminationen entstanden sind.

Im folgenden wird die Erfindung an Hand der beiliegenden Figuren beschrieben, die zeigen:
- Figur 1 ein Ausführungsbeispiel einer an der Struktur mit dem zu prüfenden Strukturbereich vorgesehenen Anordnung von Ultraschall-Elementen mit drei Piezoelementen zum Einkoppeln einer Anregung und zum Empfang der daraus entstehenden Struktur-Antwort,
- Figur 2a der zeitliche Verlauf der von dem Sender 1 in die Struktur eingekoppelten Struktur-Anregung in Form eines Dehnungs-Zeit-Diagramms, bei an der Abszisse mit der Variable t und an der Ordinate die Dehnung der Struktur an dem Ort des Senders 1 aufgetreten ist,
- Figur 2b der zeitliche Verlauf der von einem ersten Empfänger gemessenen Struktur-Antwort in Form eines Dehnungs-Zeit-Diagramms aufgrund der in der Figur 2a dargestellten Anregung, wobei auf der Abszisse die Variable t und auf der Ordinate die Dehnung der Struktur an dem Ort des Senders 1 aufgetragen ist,
- Figur 2c der zeitliche Verlauf der von einem zweiten Empfänger gemessenen Struktur-Antwort in Form des Dehnungs-Zeit-Diagramms nach der Figur 2b aufgrund der in der Figur 2a dargestellten Anregung,
- Figur 3a die in der Figur 2a dargestellte Anregung in Form eines daraus transformierten Dehnungs-Weg-Diagramms, bei dem auf der auf der Ordinate die Dehnung d und auf der Abszisse der Weg x der Dehnung der Struktur aufgetragen ist, den die von dem Sender ausgehende Struktur-Anregung bei einer angenommenen Ausbreitungs-Geschwindigkeit im Material zurückgelegt hat,
- Figur 3b ein nach der Figur 3a, bei dem die aufgrund der in der Figur 3a dargestellten Anregung auftretende Dehnung zu einer bestimmten Zeit in Abhängigkeit des vom Ort der Anregung aus zurückgelegten Weges und zusätzlich ein Erwartungsbereich dargestellt ist (9b),
- Figur 3c ein nach der Figur 3a, bei dem die aufgrund der in der Figur 3a dargestellten Anregung auftretende Dehnung zu einer bestimmten Zeit in Abhängigkeit des vom Ort der Anregung aus zurückgelegten Weges und zusätzlich ein Erwartungsbereich dargestellt ist (9c),
- Figur 4 eine Darstellung von geometrischen Beziehungen bei der Sender-EmpfängerAnordnung nach der Figur 1 zur Erklärung des Verfahrens zur Klärung von Uneindeutigkeiten,
- Figur 5a die in der Figur 2a dargestellte Anregung in Form eines Dehnungs-Weg-Diagramms nach der Fig. 3a, bei dem auf der Abszisse der Weg x der Dehnungswelle in der Struktur aufgetragen ist, den die von dem Sender ausgehende Struktur-Anregung bei einer angenommenen Ausbreitungs-Geschwindigkeit im Material zurückgelegt hat,
- Figur 5b ein nach der Figur 3b gebildetes Dehnungs-Wegstrecke-Diagramm mit einem Wegstrecken-Erwartungsbereich für einen ersten Empfänger, der zwei verschiedenen Wegstrecken für einen empfangenen Schallwellen-Impuls entspricht,
- Figur 5c ein nach der Figur 3c gebildetes Dehnungs-Wegstrecke-Diagramm mit einem Wegstrecken-Erwartungsbereich für einen zweiten Empfänger, der nicht der Wegstrecke für einen an dem betrachteten Prüfpunkt reflektierten Schallwellen-Impuls entspricht, so daß daraus eine Entsccheidung über den zutreffenden aus den beiden nach der Messung der Figur 5b in Frage kommenden Prüfpunkte getroffen werden kann.

Es werden zur Prüfung eines Bereichs einer Struktur auf SchadenssteHen zumindest ein Ultraschall-Sender und zumindest zwei Ultraschall-Empfänger, die vorzugsweise als Piezoelemente ausgeführt sind, permanent, also über den Zeitraum der eigentlichen Prüfung des Strukurbereichs hinaus dauerhaft an vorbestimmten Positionen der Struktur angeordnet oder installiert. Bei den in Betracht kommenden Anwendungen ist die Zahl der vorzusehenden Ultraschall-Elemente vorzugsweise größer, meistens größer als vier, um eine bessere Auflösung zu erreichen. Die Positionen der Sender und Emfänger sind derart festgelegt, daß sie geeignet sind, die Wirkungen von in dem zu prüfenden Strukurbereich vorliegenden Inhomogenitäten die Folge-Wirkungen von Anregungen erfassen. Es sind zumindest ein Sender und sind zumindest zwei Empfänger vorzusehen.

Es wird vor der Durchführung des Prüfverfahrens an der zu prüfenden Struktur für eine Anzahl von Punkten in dem zu prüfenden Bereich vor dem Ablauf der Materialprüfung mittels Messung eine Rechnung durchgeführt, die für jeden dieser Prüfpunkte die auf die installierten Empfänger wirkenden Strukturantworten auf eine von einem Sender ausgehende Anregung der Struktur in Art und zeitlichem Verlauf ermittelt, wobei die Annahme getroffen wird, daß in dem jeweiligen Strukturpunkt eine Inhomogenität, also beispielsweise eine Schadensstelle, vorliegt. Die ermittelten Strukturantworten sind also von lokalen, am jeweiligen Prüfpunkt gestreuten Ultraschallwellen herrührende Strukturantworten.

Die Positionen der Prüfpunkte liegen in geeigneter Weise in dem Prüfbereich der Struktur, bei der eine geforderte Prüfung des Strukturbereichs ausreichend erfolgen kann. Vorzugsweise liegen die Prüfpunke in gleichmäßigem Abstand über den zu prüfenden Strukturbereich verteilt. Die Prüfpunkte können jedoch auch ein unreglmäßiges Netz im Prüfbereich bilden. In der für jeden Prüfpunkt durchgeführten Berechnung der Strukturantwort bei der Annahme einer Inhomogenität in jedem Prüfpunkt werden berücksichtigt: die vorbestimmten Positionen des zumindest einen Ultraschall-Aktuators und der Ultraschall-Sensoren sowie das als bekannt vorausgesetzte oder angenommene Ausbreitungsverhaltens der Ultraschallwellen im Material aufgrund der Eigenschaften des Strukturmaterials bei einer vorbestimmten Art des Anregungssignals. Aufgrund analytischer oder empirischer Methoden sind die Eigenschaften des Strukturmaterials und somit das Ausbreitungsverhalten der Ultraschall-Anregungen in der Struktur bei Vorliegen einer Inhomogenität in einem oder mehreren Prüfpunkten vor Durchführung des eigentlichen Prüfverfahrens ermittelt worden.

Die Durchführung der eigentlichen Prüfung der zu prüfenden Strukturbereiche erfolgt durch eine Messung der Struktur-Antworten durch die Empfänger aufgrund vorbestimmter, mit den Berechnungen korrellierender Anregungen. Erfaßt ein Sensor ein Signal, das auf der Basis des Vergleichs mit den Berechnungen der Struktur-Antworten aufgrund seines zeitlichen Eintreffens oder seines Verlaufs auf eine Inhomogenität einem oder mehreren der betrachteten Prüfpunkte schließen läßt, werden diese Prüfpunkte als Strukturpunkte identifiziert, an denen eine Inhomogenität der Struktur vorliegen kann. Die Orte von Inhomogenitäten werden bildgebend oder auf andere Weise dem jeweiligen Ort auf der Strukturkomponente zugewiesen. Bei einer visuellen Darstellung der Struktur können diese Punkt auf geeignete Weise visuell auf dieser eingetragen werden.

In dem Fall, daß das Signal, das bei Vorliegen von Inhomogenitäten erwartet wird, nicht eindeutig ist, da es mehrere Orte gibt, von denen ein vorgegebener Streubeitrag beispielsweise aus einem Dehnungs-Zeit-Diagramm herrühren konnte, sind mehrere Sende-Empfangs-Kombinationen zu überlagern, d.h. es ist eine entsprechend große Zahl von Sendern und Empfängern vorzusehen. In diesem Fall sind Prüfpunkte, an denen bei mehreren Kombinationen verwendeter Sender und Empfänger signifikante Beiträge zustande kommen, Strukturpunkte, an denen mit hoher Zuverlässigkeit tatsächlich Inhomogenitäten vorliegen. Bei dem Vergleich der Berechnungs-Ergebnisse mit den Meß-Ergebnissen können also weitere Analysen einfliessen, wie z.B. Vergleiche der Berechnungs- und Meß-Ergebnisse von verschiedenen Prüfpunkten, um Uneindeutigkeiten der Ergebnisse aufzulösen, d.h. um Inhomogenitäten, die aufgrund einer der Messungen auf mehrere Prüfpunkte zutreffen können, einem einzelnen Prüfpunkt zuzuordnen.

Tatsächliche, d.h. durch die Gestaltung der Struktur selbst vorgegebene Inhomogenitäten werden von den beispielsweise aufgrund von Schäden zu erfassenden Inhomogenitäten durch weitere Analysen oder durch Vergleich unterschieden. Der Vergleich erfolgt vorzugsweise durch visuellen Vergleich. Dabei werden die durch die an den Prüfpunkten durchgeführten Berechnungen und Messungen ermittelten Inhomogenitäten mit tatsächlichen im Prüfbereich vorliegenden Inhomogenitäten verglichen, um zusätzliche Inhomogenitäten an anderen Orten als partielle Schadensstellen zu identifizieren.

Der Vergleich der Berechnungs- mit den Messungs-Ergebnissen wird wie folgt vorgenommen:

Bei Einkopplung einer Struktur-Anregung durch einen Ultraschall-Sender mißt jeder Ultraschall-Empfänger das durch die Anregung des Senders in die Struktur eingekoppelte Signal aufgrund der aufgetretenen zeit-variablen Struktur-Dehnung in Abhängigkeit der Zeit oder in Abhängigkeit von äquivalenten funktionalen Größen wie Orten (im folgenden mit x bezeichnet), an denen die Dehnung auftritt. Bei Vorliegen einer Inhomogenität empfängt der Empfänger eine Struktur-Antwort auf eine von einem Sender ausgehenden Anregung als Summe von zwei Beiträgen: Ein erster Beitrag wird gebildet durch die Ultraschallwelle, die direkt vom Sender zum Empfänger propagiert. Ein zweiter Beitrag wird aus Streubeiträgen von Inhomogenitäten in der zu prüfenden Struktur gebildet, die sich in ihrem zeitlichen Verlauf von den ersten Beiträgen unterscheiden aufgrund einer anzunehmenden Wellenausbreitung zwischen Sender streuender Inhomogenität und Empfänger bei der jeweils vorgenommenen Anregung. Aus diesen Ansätzen kann ein erwarteter Bereich z.B. in Bezug auf Zeiten t oder Orten x ermittelt werden, in dem eine erwartete Struktur-Antwort in Form zeitabhängiger Dehnungen, im folgenden mit d bezeichnet, auftritt.

In dem nicht erfindungsgemäßen Fall, bei dem die Anregung ein einfacher Impuls ist, kann die in einem bestimmten Prüfpunkt vorliegende Inhomogenität durch Messen eines Signals durch einen Empfänger zu einem erwarteten Zeitpunkt festgestellt werden, da sich die Anregung aufgrund der bekannten Laufzeit des sich in der Struktur unter Berücksichtigung der Reflektion durch die Inhomogenität in dem betrachteten Prüfpunkt fortpflanzt und in erwarteter Form bei dem Empfänger ankommt.

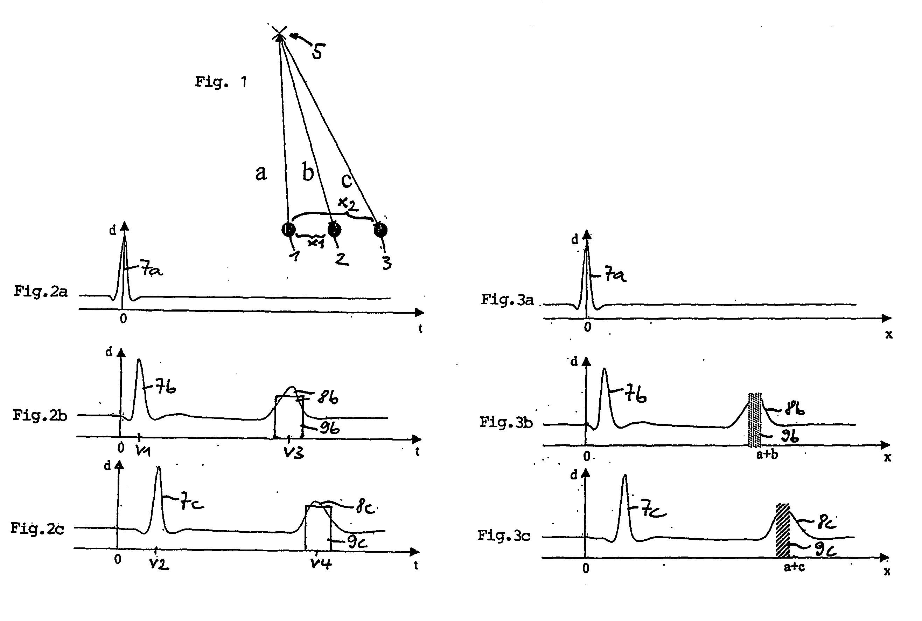

Für diesen Fall einer Impuls-Anregung wird ein Verfahren für die Identifizierung von Struktur-Inhomogenitäten für das schematisch in der Figur 1 dargestellte Ausführungsbeispiel einer Anordnung von Ultraschall-Elementen beschrieben:

Zum Einkoppeln einer Anregung und zum Empfang der daraus entstehenden Struktur-Antwort sind drei Piezoelemente 1, 2, 3 an der Struktur mit dem zu prüfenden Strukturbereich angeordnet. Ein erstes Piezoelement 1 ist dabei zum Einkoppeln der Anregung in die Struktur und die Piezoelemente 2, 3 sind zum Empfang der Struktur-Antwort vorgesehen. Die Struktur ist in der Fig. 1 mit dem Bezugszeichen 4 bezeichnet. Beispielhaft ist in der Darstellung der Figur 1 ein Prüfpunkt 5 dargestellt, an dem das Vorliegen einer Inhomogenität überprüft wird. Das Sender-Piezoelement 1 regt die Struktur mit einem Impuls zu einem Zeitpunkt t=0 an. Die Anregung gelangt u.a. auf dem Weg x1 zu dem Empfänger 2 und auf dem Weg x2 zu dem Empfänger 3. Sofern an dem Strukturpunkt 5 eine Inhomogenität vorliegt, gelangt die Anregung zusätzlich durch Reflektion an dem Strukturpunkt 5 auf den Wegen a und b zum Empfänger 2 und auf den Wegen a und c zu dem Empfänger 3. Der zeitliche Verlauf der Anregung ist in der Figur 2a und der zeitliche Verlauf der von den Empfänger-Piezoelementen empfangenen Struktur-Antworten sind in der Figur 2b und Figur 2c schematisch dargestellt. Bei den Kurven-Verläufen der Figuren 2a, 2b, 2c handelt es sich um Dehnungs-Zeit-Diagramme, wobei auf der Abszisse die Zeit t und auf der Ordinate vereinfacht die betragsmäßige Dehnung der Struktur an der Stelle des jeweiligen Piezoelements 1, 2 bzw. 3 aufgetragen ist (i.a. ist ide Dehnung bei einer bestimmten Frequenz durch Betrag und Phase gegeben).

Aufgrund der Anregung durch das Sender-Element 1 wird eine Ultraschall-Wellenfront 7a erzeugt (Figur 2a). Die Messung der darauf folgenden Struktur-Antwort wird bei der Anordnung der Figur 1 an den lokalen Empfängern oder Sensoren 2 und 3 vorgenommen. Die von dem Element 1 ausgehende Ultraschall-Wellenfront 7a erreicht zunächst auf direktem Weg x1 mit einer ersten Zeitverzögerung v1 gegenüber dem Zeitverlauf der Anregung den ersten Empfänger 2, wie an der von dem Empfänger 2 gemessenen Erhöhung 7b der Dehnung der Struktur gesehen werden kann (Figur 2b). Nach einer Verzögerung v2 gegenüber dem Zeitverlauf der Anregung erreicht die Wellenfront den zweiten Sensor 3, der eine Erhöhung 7c der Dehnung mißt (Figur 2c). Neben den direkten Signalen erhalten die Sensoren 2 und 3 im Falle einer angenommenen Inhomogenität im Strukturpunkt 5 zusätzlich Ultraschall-Signale aufgrund von Strukturdehnungen, die indirekt über eine Streuung am Prüfpunkt 5 entstanden sind, da an dem Strukturpunkt 5 ein Teil der vom Sender 1 eingekoppelten Welle in Richtung der Empfänger 2 und 3 gestreut wird. Dadurch werden Ultraschall-Signale aufgrund der Dehnungs-Erhöhungen 8b und 8c mit den Zeitverzögerungen v3 bzw. v4 von den Empfängern 2 bzw. 3 gemessen werden.

Die Verzögerung oder der Zeitpunkt, mit der bzw. an dem die gestreute Welle an dem Empfänger 2 bzw. 3 ankommt, ist bei sonst konstant angenommenen Parametern (Dispersionsverhalten, Umgebungsparameter, etc.) eine Funktion der Position des Prüfpunktes 5 in Relation zu dem Sender 1 und den Empfängern 2 und 3.

In den Figuren 3a, 3b bzw. 3c sind die Dehnungsverläufe der Figuren 2a, 2b bzw. 2c in Dehnungs-Laufstrecken- oder Dehnungs-Weg-Diagramme transformiert worden, wobei die Laufstrecke mit der Bezeichnung x auf der Abszisse aufgetragen ist. Im Falle konstanter Ausbreitungsgeschwindigkeit in der zu prüfenden Struktur kann dies direkt mit der Formel t = x/c erfolgen. Bei Strukturen mit komplexerem Dispersionsverhalten des Materials sind entsprechende andere Transformationen anzuwenden, die vorab zu ermitteln sind.

Wenn an dem Strukturpunkt 5 eine Inhomogenität vorliegt, so empfangen die Empfänger 2 und 3 Dehnungs-Überhöhungen 8b, 8c nachdem die Anregung die Strecke a+b bzw. a+c durchlaufen hat (Fig. 3b bzw. 3c). Bei der Prüfung eines Prüfpunktes 5 auf eine dort strukturell vorhandene Inhomogenität werden Erwartungsbereiche 9b (Fig. 3b) bzw. 9c (Fig. 3c) vorgesehen, an denen eine aus einer Reflektion an dem Prüfpunkt 5 entstandenen Dehnungs-Erhöhung an den Empfängern 2 bzw. 3 auftritt. Diese Erwartungsbereiche werden vor Durchführung der Messung experimentell oder vorzugsweise analytisch ermittelt. Wird durch die Empfänger 2 oder 3 ermittelt, daß in einem Erwartungsbereich eine Dehnungs- Überhöhung vorliegt, so wird eine Inhomogenität im Prüfpunkt 5 festgestellt. Die Erwartungsbereiche werden vorzugsweise zeitabhängig vorbestimmt bzw. das Eintreffen der Erhöhung zeitabhängig überprüft.

Dieses Vorgehen wird an einer Mehrzahl von Prüfpunkten 5 durchgeführt, die derart zu bestimmen sind, daß eine ausreichende Prüfung des zu prüfenden Strukturteils auf Inhomogenitäten und gegebenenfalls eine ausreichende visuelle Darstellung der Inhomogenitäten erfolgen kann. Vorzugsweise sind die Prüfpunkte über den zu prüfenden Strukturbereich verteilt.

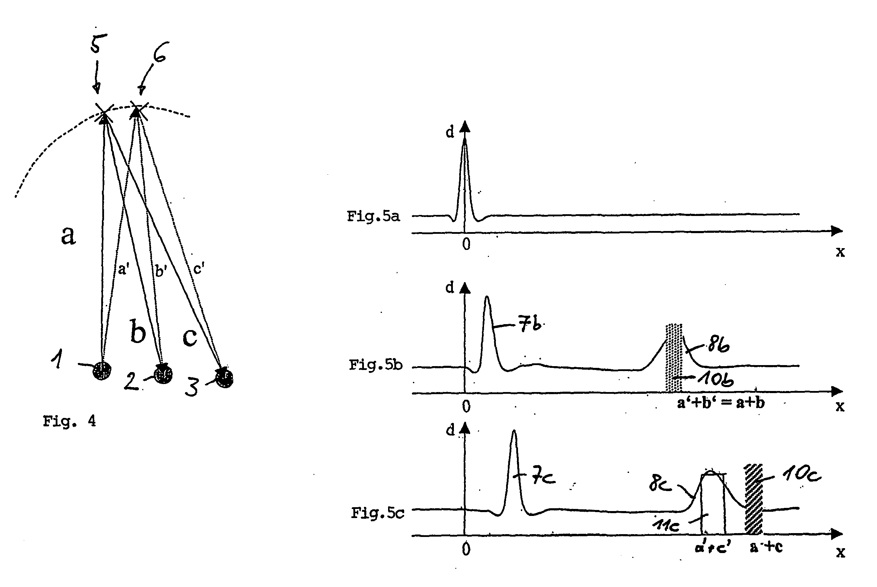

Wie an Hand der Fig. 4 verdeutlicht wird, muß diese Zuordnung für eine einzelne Kombination (Sender, Empfänger) nicht eindeutig sein. Nachfolgend wird die Identifizierung der zutreffenden Prüfpunkte mit Inhomogenitäten bei Uneindeutigkeiten der Messungen an Hand der Figuren 4 und Figuren 5a, 5b, 5c beschrieben:

Eine in einem Prüfpunkt 5 oder einem davon verschiedenen Prüfpunkt 6 (Fig. 4) gelegene Inhomogenität kann zum gleichen von einem Empfänger 2 gemessenen Signal führen, wenn die Laufstrecke ebenfalls a+b beträgt. Das trifft bei einer Sender-Empfänger-Konstellation nach der Figur 4 auf Prüfpunkte zu, die auf einer Ellipse durch den Prüfpunkt 5 oder 6 mit den Positionen des Senders 1 und des Empängers 2 als Brennpunkte liegen. Dies ist aus dem Dehnungs-Wegstrecken-Diagramm der Figur 5b erkennbar. Der von dem Empfänger oder Sensor 2 empfangene Schallwellen-Impuls 8b liegt im Erwartungsbereich 10b. Dabei ist der Erwartungsbereich vor der Messung aufgrund der Prüfpunkte 5 und 6 (Fig. 4) unter genannten Annahmen ermittelt worden. Da der Weg der am Prüfpunkt 5 reflektierten Schallwelle (a+b) im Betrag gleich dem Weg (a'+b') der am Prüfpunkt 6 reflektierten Schallwelle ist, ergibt sich im Dehnungs-Wegstrecken-Diagramm der Fig. 5b für beide Prüfpunkte 5 und 6 derselbe Ennrartungsbereich 10b, d.h. beide Erwartungsbereiche 10b sind an derselben Stelle der Wegstrecke x (Abszisse) gelegen.

In der Figur 5c ist das Dehnungs-Wegstrecken-Diagramm für den zweiten Empänger 3 dargestellt. Der an einer Inhomogenität am Prüfpunkt 6 reflektierte und vom Empfänger 6 empfangene Schallwellen-Impuls 8c hat den Weg (a'+c') zurückgelegt. Entsprechend tritt der empfangene Schallwellen-Impuls 8c im Diagramm der Fig. 5c an der Wegstrecke (a'+c') der Abszisse auf. Bei der Betrachtung der Prüfpunkte 5 und 6 ergeben sich für den Empfänger 3 zwei verschiedene Erwartungsbereiche 10c bzw. 11c für einen an diesen Prüfpunkten 5 und 6 reflektierten Schallwellen-Impuls, da sich durch eine Reflektion am Prüfpunkt 5 die Wegstrecke (a+c) ergäbe, die dem Erwartungsbereich 10c entspräche, und durch eine Reflektion am Prüfpunkt 6 die Wegstrecke (a'+c') ergäbe, die dem Erwartungsbereich 11c entspricht. Dadurch daß der vom Empfänger 3 gemessene Schallwellen-Impuls 8c im Wegstrecken-Diagramm der Fig. 5c im gleichen Wegstrecken-Bereich (Abszisse) wie der Erwartungsbereich 11c gelegen ist, ist der gemessene Schallwellen-Impuls 8c aufgrund der Reflektion der Anregung am Prüfpunkt 6 zum Empfänger 3 gelangt.

Allgemein werden beim Vorliegen von Uneindeutigkeiten von Messungen in Bezug auf mehrere Prüfpunkte die Erwartungsbereiche oder erwarteten Laufstrecken sämtlicher in Betracht kommender Prüfpunkte für die Position jedes Empfängers mit den vom jeweiligen Empfänger empfangenen Meßsignalen verglichen.

Es wird also durch den Vergleich von an der Struktur mit dem zu prüfenden Bereich installierten Sensoren gemessenen Struktur-Antworten auf Anregungen mit in Bezug auf vorgegebene Prüfpunkte ermittelten Erwartungsbereichen auf Inhomogenitäten an der Stelle der vorgegebenen Prüfpunkte geschlossen. Vorzugsweise werden die ermittelten Inhomogenitäten mittels eines bild gebenden Verfahrens visuell zur weiteren Analyse dargestellt. Dabei kommt z.B. eine automatische Rißmuster-Erkennung in Betracht. Die Bild-Analyse als teil der Ergebnis-Analyse kann in einer mit den Sensoren in Verbindung stehenden Datenverarbeitungs-Einrichtung vorgenommen werden. Diese Datenverarbeitungs-Einrichtung kann mit den Sensoren drahtlos in Verbindung stehen. Dort können auch weitere Teile der Ergebnis-Analyse ablaufen.

Die lokale Auflösung des bildgebenden Verfahrens hängt neben den physikalischen Parametern natürlich davon ab, wie fein ein Raster für die Prüfpunkte gewählt wird. Die rechnerische Auflösung kann je nach Signal zu Rausch-Verhältnis der gemessenen Daten durchaus eine oder mehr Größenordnungen höher sein, als die durch die maximale Sample-Rate auflösbare Raumzelle vorgibt, solange die Messpunkte ausreichend kohärent und synchron mit der Anregung sind.

Stehen ausreichend viele Kombinationen von Sendern und Empfängern zur Verfügung, dann kann durch eine entsprechende Überlagerung (z.B. Summation) einerseits die auftretende Uneindeutigkeit reduziert werden und andererseits eine Verteilung der Inhomogenitäten über den Ort für den Prüfbereich erstellt werden, die angibt wie inhomogen dieser Ort sich in Bezug auf alle Kombinationen verhält.

Als in das Strukturteil mit dem Prüfbereich einzukoppelnde Anregungen kommen Funktionen jeder Art in Betracht. Vorzugsweise werden Anregungs-impulse verwendet.

Das Verfahren kann auf jede Anordnung von Ultraschallelementen, welche die oben angegebenen erfindungsgemäßen physikalischen Bedingungen erfüllen, angewendet werden. Das beschriebene Verfahren ist aufgrund der i.A. dreidimensionalen Ausbreitung der Ultraschallwellen für dreidimensionale Anwendungen vorgesehen. In vielen Fällen kann das dreidimensionale Ausbreitungsverhalten in dünnen Strukturen näherungsweise zweidimensional beschrieben werden oder auf ein zweidimensionales Problem projeziert werden. In solchen Fällen kann dieses Verfahren auch auf zweidimensionale Strukturen angewendet werden.

Da das Verfahren ein Ultraschallbild der Struktur machen kann, sind weitere geeignete Auswertungsmöglichkeiten dieser Daten denkbar. So könnten insbesondere bei größeren Strukturen Abstände bzw. Geometrien (Abmessungen) aus dem Ultraschallbild genau ermittelt werden. Dadurch ist eine globale Abstandsmessung möglich. Anwendungen zur Detektion und Bestimmung globaler Verformungen werden somit möglich.

Auch sind aufgrund der Lokalisierungsfähigkeit zusätzliche Diagnosemöglichkeiten möglich: Ändert sich beispielsweise das Ultraschallübertragungsverhaiten an Grenzschichten, so kann dort auf eine signifikante Änderung der Grenzschicht geschlossen werden (z.B. starke Fehlstellung von Bolzen).

Neben der amplitudenmäßigen Reflektion kann auch die lokale phasen- und frequenzmäßige Streuung der Ultraschallwellen lokal bewertet werden, um die Zuverlässigkeit der Schadensdiagnostik weiter zu erhöhen. Hierzu ist es allerdings erforderlich, die Dehnungswerte aus den jeweiligen Erwartungsbereichen nicht nur betragsmäßig, sondern auch phasen- und frequenzmäßig bei der Summation zu überlagern (kohärente Summation). Unter der Annahme eines vorbestimmten Phasen- und Frequenz-Verhaltens bei der Wellenausbreitung entlang einer Trajektorie lassen sich im Erwartungsbereich gemessene Abweichungen davon der lokalen Inhomogenität zuordnen und dienen so zur weiteren Charakterisierung.

Das Verfahren mit einer Anordnung von Ultraschallelementen ist physikalisch sinnvoll anwendbar, wenn folgende Kriterien zumindest in relevanten Teilbereichen der zu prüfenden Strukturkomponente oder des zu prüfenden Strukturteils erfüllt sind:
a. Die Wellenlänge des Ultraschalls muß vergleichbar (nicht mehr als eine Größenordnung größer) oder klein sein im Verhältnis zu den Abmessungen der Inhomogenitäten in der Strukturkomponente, die durch das bildgebende Verfahren aufgelöst werden sollen.
b. Die Ultraschallanregung und -messung muß lokal sein, d.h. der örtliche Messbereich sollte klein oder vergleichbar sein mit der aufzulösenden Inhomogenität. Ist dies nicht möglich oder erforderlich, so muß die dimensionsbedingte Ultraschall-Charakteristik des angekoppelten Sensors in der Signalanalyse berücksichtigt werden.
c. Die Wellenausbreitung in der Struktur muß zumindest abschnittsweise in etwa nach linearen Materialgesetzen erfolgen.
d. Die Anordnung der Ultraschallelemente ist derart vorzusehen, daß die geometrische Verschiedenheit zwischen Sender-Empfänger-Kombinationen bzw. das durch sie entstehende Ultraschallfeld ausreichend hoch ist, um die möglicherweise auftretende Uneindeutigkeit des oben beschriebenen Verfahrens ausreichend zu reduzieren. Beispielsweise ist zur Erzielung einer horizontalen Auflösung Ober eine vorbestimmte Reichweite auch in horizontaler Richtung eine nichtverschwindende Apertur der Anordnung notwendig.
e. Die zeitliche Auflösung der Messung muß so hoch sein, daß ein hypothetisch gemessener Reflex in dem zu beobachtenden Bereich eindeutig mit einer geforderten Auflösung lokalisiert werden kann: Die verbleibende zeitliche Unschärfe (z.B. Zeit zwischen zwei Samples) darf die hypothetische Wellenausbreitung nicht mehr verschieben oder verzerren als durch die geforderte Auflösung zulässig.

Die voranstehend aufgeführten Kriterien a bis e sind simultan zu erfüllen, d.h. jedes der genannten Kriterien ist als notwendige Bedingung anzusehen.

Bei der gerätetechnischen Ausführung der Prüfvorrichtung sind verschiedene Varianten möglich:

Als Ultraschall-Elemente kann jedes Element vorgesehen werden, das in der Lage ist, eine Ultraschall-Welle lokal (siehe Fall b.) zu erzeugen oder zu messen. Für die-Erzeugung von Ultraschall-Wellen kommen derzeit in Frage: Piezo-Keramiken, thermische Ultraschall-Quellen (z.B. resistive Wärmequellen, Laser-generierte Quellen; jeweils mit Glasfaser-Zuleitung oder gerichtet durch die Atmosphäre), feld-induzierte Quellen, etc.. Für die Messung von Ultraschall-Wellen kommen derzeit z.B. in Frage: Piezo-Keramiken, Dehnungs-Sensoren (DMA), faseroptische Bragg-Grating-Sensoren. Die Ankopplung erfolgt in den meisten Fällen durch ein Koppelmedium (z.B. Kleber). Ausnahmsweise können auch Verfahren mit Luftkopplung oder mit Laser angewendet werden.

Es kann ein und derselbe Sender bzw. Empfänger für mehrer Sender-Empfänger-Kombinationen verwendet werden. Dadurch kann der Aufwand an Elektronik optimiert werden. Das gesamte Ultraschall-Bild für die Auswertung ergibt sich dann aus der Überlagerung der Einzelmessungen. Die Sender- und Empfänger bilden die eigentliche Prüfeinrichtung, während die Ergebnis-Analyse einschließlich der Signal-Aufbereitung in einer Auswerte-Einheit erfolgt. Die Funktionen zur Durchführung des Verfahrens können in verschiedener Weise Hardware-mäßig implemeniert sein. Vorzugsweise wird die Ergebnis-Analyse in einer Datenverarbeitungs-Einrichtung durchgeführt, die mit der Prüfeinerichtung über Leitungen oder drahtlos in Verbindung steht,. Die Sensor-Treiber können an den Sensoren oder in der Datenverarbetiungs-Einrichtug implementiert sein.

Die Ultraschall-Elemente stehen miteinander in einer Signalverbindung, wobei die Kommunikation zwischen den einzelnen Elementen über Leitungen oder drahtlos erfolgen kann.

Die an der zu prüfenden Struktur angeordnete Ultraschall-Sensorik kann auch ergänzt werden durch weitere Sensorik, z.B. durch konventionelle Dehnungssensoren oder Temperatursensoren, um das Prüfergebnis noch weiter zu verbessern oder zu ergänzen.

Noch weiter kann der elektronische Aufwand reduziert werden, wenn während einer Einzelmessung ein Ultraschallelement lediglich als Sender arbeitet und ein anderer lediglich als Empfänger. Es entfällt zwar die Information, die für ein einzelnes Element im Puls-Echo-Betrieb erhalten werden könnte, dafür entfällt jedoch der elektronische Aufwand, zwischen Sende- und Empfangsbetrieb umzuschalten. Beispielsweise ergeben sich bei 16 Ultraschall-Elementen insgesamt 16*15=240 mögliche Sender-Empfänger-Kombinationen, in denen ein Element als Sender und ein Element als Empfänger arbeitet.

Weiterhin ist es möglich, bei gleichem Signal-zu-Rausch-Verhältnis die Reichweite des Ultraschalls der Anordnung zu erhöhen oder bei gleicher Reichweite das Signal zu Rausch Verhältnis zu verbessern. Dies wird dadurch ermöglicht, daß durch die gleichbleibende Positionierung der Sender und Empfänger an der zu prüfenden Struktur mehrere Meßergebnisse überlagert werden und somit Rauscheinflüsse im Meßkreis oder in der Ultraschallwellenausbreitung (z.B. akustische Störungen) herausgemittelt werden. Es ist damit möglich, bei gleicher Qualität des Ultraschallverfahrens mit weitaus geringeren Anregungspegeln, z.B. Anregungsspannungen zwischen 1 und 30 V zu arbeiten als in einer Anwendungen nach dem Stand der Technik, bei denen Anregungsspannungen zwischen 50 und 300V üblich sind.

Erfindungsgemäß kann dadurch auch weitere Elektronik zur Verstärkung des Anregungssignals entfallen und einfachere elektronische Bausteine verwendet werden. Durch die Verwendung niedrigerer Spannungen verringern sich auch elektromagnetische Interferenzen, so daß ein Einsatz der erfindungsgemäß permanent installierten Anordnung auch in elektromagnetisch kritischeren Bereichen eingesetzt werden kann (z.B. am fliegenden Gerät).

Der erfindungsgemäße Vorteil ergibt sich dadurch, daß als Anregung nicht mehr nur eine einzige bestimmte Anregungsform, sondern eine Anregung aus einer Summe von Einzelanregungen aufgebaut wird. Eine rechnerische Überlagerung der Einzelmessungen ergibt dann ein Gesamtergebnis, das näherungsweise dem Ergebnis entspricht, das durch eine summarische Anregung entstanden wäre. Auf diese Weise können theoretische Anregungen mit extrem hohen Amplituden simuliert werden. Würden z.B. die Sender mit 100V bei vorgegebenem Signal-zu-Rausch-Verhältnis betrieben, so können nach dem eben beschriebenen Verfahren theoretische Anregungen im Bereich von 10^5-10^6 V und mehr simuliert werden, die anwendungstechnisch überhaupt nicht zulässig wären. Bei gleichem Signal-zu-Rausch-Verhältnis ergibt sich dadurch eine entsprechende Reichweitenerhöhung oder bei gleicher Reichweite eine entsprechende Signal zu Rauschverbesserung. Dabei muss vorausgesetzt werden, dass bei der zu prüfenden Struktur ein lineares Material vorliegt.

Ein Vorteil der Erfindung ergibt sich daraus, daß durch die höheren Reichweiten als bei Verfahren nach dem Stand der Technik der Bereich der zu applizierenden Sensorik relativ zu bekannten Verfahren bzw. Vorrichtungen kleiner ausfallen kann, und somit auch klein im Vergleich zu den Abmessungen der Strukturkomponente. Gewicht und benötigtes Einbauvolumen lassen sich so erheblich reduzieren. Die Unterbringung von Sensor und Auswerteelektronik in mikroelektronischer Form ist deshalb durch die Erfindung technologisch ermöglicht.

Zusamenfassend ist erfindungsgemäß eine zerstörungsfreie Ultraschall-Prüfmethode zur Implementierung in einer Prüfeinrichtung zur Detektion von Schäden in einem Prüfbereich eines Strukturteils durch Ermittlung von Reflektionen an Inhomogenitäten im Prüfbereich vorgesehen, wobei an der Struktur zumindest ein Ultraschall-Sender zur Einkopplung von Ultraschall-Anregungen in das Strukturteil und zumindest zwei Ultraschall-Empfänger zum Empfang von Struktur-Antworten auf die Anregungen installiert sind, wobei im Prüfbereich eine Anzahl von Prüfpunkten festgelegt und abgespeichert sind, wobei in der Prüfeinrichtung für jeden Prüfpunkt und jeden Ort der Ultraschall-Empfänger Erwartungsbereiche für Signalformen implementiert sind, die bei Vorliegen einer Inhomogentiät im jeweiligen Prüfpunkt an dieser reflektiert und vom jeweiligen Ultraschall-Empfänger gemessen wird, wenn eine tatsächliche Inhomogenität im jeweiligen Prüfpunkt tatsächlich vorliegt, wobei die Ultraschall-Prüfmethode die in Anspruch 1 definierten Schritte umfasst.

Die Messung und Speicherung der Struktur-Antwort durch die Empfänger erfolgt dadurch, daß die Empfänger die Messung und Speicherung in einer zeitlichen Abfolge oder simultan oder nach einer Kombination hieraus vornehmen.

Beim Vorliegen von Mehrdeutigkeiten der gemessenen Struktur-Antworten in Bezug auf die Zuordnung einer Inhomogenität auf einen bestimmten Prüfpunkt werden die Erwartungsbereiche mehrerer in Betracht kommender Prüfpunkte mit den von jedem Empfänger empfangenen Meßsignalen verglichen. Die Erwartungsbereiche können aus erwarteten Laufstrecken gebildet werden. Die Identifikation von Schadens-Orten kann durch visuellen Vergleich erfolgen.

Ein Sender (1) kann zum Einkoppeln der Anregung in die Struktur und mindestens zwei Empfänger (2, 3) können zum Empfang der Struktur-Antwort vorgesehen sein.

Zur Durchführung der vorgenannten Schritte ist eine Prüfeinrichtung vorgesehen. Diese kann mit einer Datenverarbeitungs-Einrichtung in Verbindung stehen, in der zumindest ein Teil der Ergebnis-Analyse durchgeführt wird.

## Patentansprüche

1. Zerstörungsfreie Ultraschall-Prüfmethode zur Implementierung in einer Prüfeinrichtung zur Detektion von Schäden in einem Prüfbereich (5,6) eines Strukturteils (4) aus einem linearen Material durch Ermittlung von Reflexionen an Inhomogenitäten im Prüfbereich (5,6), wobei an der Struktur zumindest ein Ultraschall-Sender (1) zur Einkopplung von Ultraschallanregungen in das zu prüfende Strukturteil (4) und zumindest zwei Ultraschall-Empfänger (2,3) zum Empfang von Antworten aus den Prüfbereichen (5,6) des Strukturteils (4) auf die Ultraschallanregungen permanent installiert sind, wobei des weiteren in jedem Prüfbereich (5,6) eine Anzahl von Prüfpunkten festgelegt und abgespeichert sind, derart, dass in der Prüfeinrichtung für jeden Prüfpunkt und jeden Ort der Ultraschall-Empfänger (2,3) Erwartungsbereiche für Signalformen implementiert sind, die bei Vorliegen einer Inhomogenität im jeweiligen Prüfpunkt an dieser reflektiert und vom jeweiligen Ultraschall-Empfänger (2,3) gemessen wird, wobei die Ultraschall-Prüfmethode folgende Schritte umfasst,
- Einkopplung zumindest einer vorbestimmten Anregung in das Strukturteil und Messung sowie Speicherung der Antworten aus den Prüfbereichen des Strukturteils durch jeden Empfänger (2,3),
- Vergleich der von jedem Empfänger (2,3) tatsächlich gemessenen Antwort mit der erwarteten Antwort auf die zumindest eine Anregung eines Ultraschall-Senders (1), so dass auf dem Ultraschallbild eine Identifikation von Schadens-Orten durch Vergleich der eventuell festgestellten Inhomogenitäten mit strukturell vorgegebenen Inhomogenitäten erfolgen kann,
**dadurch gekennzeichnet, dass**
- die sequentielle Einkopplung einer Mehrzahl von vorbestimmten Ultraschall-Anregungen in das Strukturteil (4) mittels Sender (1) und Messung sowie Speicherung der Struktur-Antworten durch die Empfänger (2,3) erfolgt und
- dass der Vergleich der von jedem Empfänger (2,3) gemessenen Antwort aus den Prüfbereichen (5,6) des Strukturteils (4) auf die Anregungen mit den in Bezug auf jeden vorgegebenen Prüfpunkt (5,6) jeweils relevanten Erwartungsbereichen vorgenommen wird, wobei diese aufgrund der Summe der sequentiell eingekoppelten Ultraschall-Anregungen ermittelt werden, um so Anregungen mit extrem hohen Amplituden zu simulieren.

2. Zerstörungsfreie Ultraschall-Prüfmethode nach Anspruch 1, **dadurch gekennzeichnet, dass** zum visuellen Vergleich Bildanalyse-Methoden verwendet werden.

3. Zerstörungsfreie Ultraschall-Prüfmethode nach den Ansprüchen 1 und/oder 2, **dadurch gekennzeichnet, dass** als Sender (1) und/oder Empfänger (2,3) Piezo-Ultraschallelemente verwendet werden.

4. Zerstörungsfreie Ultraschall-Prüfmethode nach Anspruch 3, **dadurch gekennzeichnet, dass** als Piezo-Ultraschallelemente Wärmepuls- oder Dehnungssensoren verwendet werden.

5. Zerstörungsfreie Ultraschall-Prüfmethode nach einem der Ansprüche 1 bis 4, **dadurch gekennzeichnet, dass** die Prüfergebnisse drahtlos an eine Datenverarbeitungseinrichtung übermittelt werden, in der zumindest ein Teil der Ergebnisanalyse durchgeführt wird.

## Claims

1. Nondestructive ultrasound test method for implementation in a test device to detect damage in a test region (5, 6) of a structural part (4) made of a linear material by determining reflections from inhomogeneities in the test region (5, 6), at least one ultrasound transmitter (1) for inputting ultrasound excitations into the structural part (4) to be tested and at least two ultrasound receivers (2, 3) for receiving responses to the ultrasound excitations from the test regions (5, 6) of the structural part (4) being permanently installed on the structure, a number of test points furthermore being established in each test region (5, 6) and stored so that expectation ranges for signal waveforms which, when there is an inhomogeneity at the respective test point, are reflected from it and measured by the respective ultrasound receiver (2, 3), are implemented in the test device for each test point and each position of the ultrasound receivers (2, 3), the ultrasound test method comprising the following steps,
- inputting a least one predetermined excitation into the structural part and measuring and storing the responses from the test regions of the structural part by each receiver (2, 3),
- comparing the response actually measured by each receiver (2, 3) with the expected response to the at least one excitation by an ultrasound transmitter (1), so that identification of damage sites can be carried out on the ultrasound image by comparing the inhomogeneities possibly established with structurally predetermined inhomogeneities,
**characterised in that**
- a multiplicity of predetermined ultrasound excitations are sequentially input into the structural part (4) by means of transmitters (1) and the structural responses are measured and stored by the receivers (2, 3), and
- the response to the excitations from the test regions (5, 6) of the structural part (4) as measured by each receiver (2, 3) is compared with the expectation ranges respectively relevant in relation to each predetermined test point (5, 6), these being determined on the basis of the sum of the sequentially input ultrasound excitations so as to simulate excitations with extremely high amplitudes.

2. Nondestructive ultrasound test method according to Claim 1, **characterised in that** image analysis methods are employed for visual comparison.

3. Nondestructive ultrasound test method according to Claims 1 and/or 2, **characterised in that** piezo ultrasound elements are used as transmitters (1) and/or receivers (2, 3).

4. Nondestructive ultrasound test method according to Claim 3, **characterised in that** thermal pulse or extension sensors are used as piezo ultrasound elements.

5. Nondestructive ultrasound test method according to one of Claims 1 to 4, **characterised in that** the test results are communicated wirelessly to a data-processing device in which at least some of the result analysis is carried out.

## Revendications

1. Procédé de vérification aux ultrasons non destructive à mettre en oeuvre dans un dispositif de contrôle pour la détection d'endommagements dans une zone de contrôle (5, 6) d'une partie de structure (4) réalisée en un matériau linéaire par la détermination de réflexions sur des défauts d'homogénéités dans la zone de contrôle (5, 6), dans lequel au moins un émetteur à ultrasons (1) pour l'injection de stimulations par ultrasons dans la partie de structure (4) à contrôler et au moins deux récepteurs à ultrasons (2, 3) pour la réception de réponses fournies par les zones de contrôle (5, 6) de la partie de structure (4) en réponse aux stimulations par ultrasons sont installés en permanence dans la structure, dans lequel par ailleurs un nombre de points de contrôle sont définis et sont mémorisés dans chaque zone de contrôle (5, 6), et ceci de telle façon que dans le dispositif de contrôle soient mises en oeuvre pour chaque point de contrôle et pour chaque endroit des récepteurs à ultrasons (2, 3) des zones d'attente pour des formes de signaux qui, en cas de présence d'un défaut d'homogénéité au point de contrôle respectif, font l'objet d'une réflexion sur celui-ci et sont mesurées par le récepteur à ultrasons respectif (2, 3), et dans lequel le procédé de vérification aux ultrasons comprend les étapes suivantes :
- injection d'au moins une stimulation prédéterminée dans la partie de structure et mesure ainsi que mémorisation par chaque récepteur (2, 3) des réponses émanant des zones de mesure de la partie de structure,
- comparaison de la réponse effectivement mesurée par chaque récepteur (2, 3) avec la réponse attendue en fonction de l'au moins une excitation par un émetteur à ultrasons (1), de sorte que sur l'image des ultrasons peut avoir lieu une identification d'endroits endommagés par une comparaison des défauts d'homogénéité éventuellement constatés avec des défauts d'homogénéité imposés de manière structurelle,
**caractérisé**
- **en ce que** l'injection séquentielle dans la partie de structure (4) d'une pluralité de stimulations par ultrasons prédéterminées a lieu au moyen de l'émetteur (1) et par une mesure ainsi que par une mémorisation des réponses de structure par les récepteurs (2, 3) et
- **en ce que** la comparaison de la réponse qui est mesurée par chaque récepteur (2, 3), qui provient des zones de contrôle (5, 6) de la partie de structure (4) et qui se rapporte aux stimulations a lieu avec les zones d'attente qui sont respectivement importantes en fonction de chaque point de contrôle imposé (5, 6), celles-ci étant déterminées sur la base de la somme des stimulations par ultrasons injectées de manière séquentielle, et ceci pour simuler ainsi des stimulations avec des amplitudes extrêmement élevées.

2. Procédé de vérification aux ultrasons non destructive selon la revendication 1, **caractérisé en ce que** des méthodes d'analyse d'images sont utilisées pour la comparaison visuelle.

3. Procédé de vérification aux ultrasons non destructive selon les revendications 1 et/ou 2, **caractérisé en ce que** des éléments à ultrasons piézoélectriques sont utilisés comme émetteur (1) et/ou comme récepteurs (2, 3).

4. Procédé de vérification aux ultrasons non destructive selon la revendication 3, **caractérisé en ce que** des capteurs thermiques à impulsions ou des capteurs extensométriques sont utilisés comme éléments à ultrasons piézoélectriques.

5. Procédé de vérification aux ultrasons non destructive selon l'une quelconque des revendications 1 à 4, **caractérisé en ce que** les résultats des contrôles sont transmis sans fil à un dispositif de traitement de données dans lequel a lieu au moins une partie de l'analyse des résultats.
